# EUROPEAN PATENT APPLICATION

(11) **EP 4 574 350 A1**
(43) Date of publication of application: **25.06.2025**
(21) Application number: 22956576.7
(22) Date of filing: 25.08.2022
(51) Int. Cl.: B25J 11/00, B25J 5/00, B25J 9/00, B25J 19/00

(54) **TRAVELING ROBOT**

(71) Applicant: LG Electronics Inc., Yeongdeungpo-gu Seoul 07336 (KR)
(72) Inventor: KIM, Moonchan, Seoul 06772 (KR); LEE, Iljae, Seoul 06772 (KR); LEE, Gunho, Seoul 06772 (KR); LEE, Wondong, Seoul 06772 (KR); MUN, Sanghun, Seoul 06772 (KR); KIM, Woojin, Seoul 06772 (KR)
(74) Representative: Schornack, Oliver
(86) International application number: PCT/KR2022/012752
(87) International publication number: WO 2024/043370

(57) **Abstract**

**Abstract:** A traveling robot comprises: a lower housing; a frame assembly positioned inside the lower housing; a traveling unit position at the lower part of the frame assembly; a tray frame coupled to the upper part of the lower housing so as to extend upwardly; a load cell coupled to the tray frame; a moving bracket coupled to the upper part of the load cell; a tray holder coupled to the moving bracket and protruding through a fastening hole of the tray frame; and a tray module seated on the tray holder. By having the load cell, the traveling robot is capable of detecting whether an object placed on a tray is present or falling, toppling over, etc. and thus is capable of traveling in a stable manner.

## Description

### [Technical Field]

The present disclosure relates to a driving robot with a simple assembly and disassembly structure, easy maintenance, and rational space utilization of a mounting space.

### [Background]

To take charge of a portion of factory automation, robots have been developed for industrial use. Recently, fields of application of the robots have been further expanding, and not only a medical robot and an aerospace robot, but also a robot that may be used in a daily life are being developed.

Such robot for the daily life is being developed to provide a specific service (e.g., shopping, serving, conversation, cleaning, and the like) in response to a user command. Unlike the industrial robot that performs repetitive tasks by being fixed at a specific location or a robot that performs a specific specialized function at a high cost, such as the medical or aerospace robots, travel and communication functions are important for the robot for the daily life and the robot for the daily life is difficult to be distributed when a manufacturing cost thereof is too high.

In particular, because the robot does not walk on two feet like humans but moves using wheels, the robot must be able to move over a bump on the floor or avoid an obstacle, must be able to minimize impact without falling when moving over the bump on the floor, and must be able to make quick decisions using multiple sensors to avoid the obstacle.

One that has been actively developed recently as an example of such a robot is a serving robot that may transport a bowl containing liquid food such as noodle or soup. The bowl containing the food may be put on a tray equipped in the robot and the robot may transport the food to a customer or a service provider.

A driving robot that transports food is mainly used indoors, but there is a risk of food spilling or malfunctioning resulted from a collision with an obstacle, so that a situation in which the robot needs to be disassembled for repair occurs. In this regard, when disassembly and reassembly are difficult, maintenance time may be long and functions may not operate properly.

### [Summary]

### [Technical Problem]

The present disclosure is to provide a driving robot with a simple assembly and disassembly structure, easy maintenance, and rational space utilization of a mounting space.

### [Technical Solutions]

Provided is a driving robot including a lower housing, a frame assembly positioned inside the lower housing, a driving structure positioned under the frame assembly, a tray frame coupled to an upper portion of the lower housing and extending upward, a load cell coupled to the tray frame, a moving bracket coupled to an upper portion of the load cell, a tray holder coupled to the moving bracket and protruding via a fastening hole of the tray frame, and a tray module seated on the tray holder.

The fastening hole of the tray frame may include a plurality of fastening holes, and the moving bracket may be formed at a location corresponding to each pair of fastening holes and include a plurality of tray holder fastening portions.

The driving robot may further include a hole cover covering a fastening hole not coupled with the tray holder among the plurality of fastening holes.

The load cell may include an elastic body whose shape changes when pressurized, and a strain gauge that generates an electric signal based on the deformation of the elastic body.

The elastic body may have a Z-shape including a first slot extending rearward from a front side and a second slot extending forward from a rear side.

The tray frame may include a stopper groove defined in a surface facing the moving bracket and extending in a vertical direction, the moving bracket may include a stopper bump protruding in a direction of the stopper groove of the tray frame, and a width of the stopper groove may be greater than a width of the stopper bump.

The driving robot may further include a fixed bracket fixed to the tray frame, and the load cell may be fastened to an upper portion of the fixed bracket and coupled to the tray frame.

The tray frame may be inclined such that an upper end is positioned rearward of a lower end, the fastening hole may be defined in a direction perpendicular to the extension direction of the tray frame, and the tray holder may include a support flat in a direction perpendicular to a direction of gravity.

The driving robot may further include a tray bar located at a lower portion of the tray module, extending in a front and rear direction, and including a tray fastening portion fastened to the tray holder, and the tray fastening portion may include a plurality of tray fastening portions formed in the front and rear direction.

The driving robot may further include a battery coupled to the frame assembly, a substrate module coupled to the frame assembly and positioned above the battery, and a cable connecting the load cell to the substrate module via the tray frame.

The tray frame may include a pair of tray frames on left and right sides, and the driving robot may include a head frame connecting upper ends of the pair of tray frames to each other, and an upper basket formed on the head frame.

The driving robot may further include a display located on a front surface of the upper basket.

The tray frame may include a pair of tray frames on left and right sides, and the driving robot may further include a slide basket inserted into a space between the tray module, the lower housing, and the pair of tray frames.

### [Advantageous Effects]

The driving robot of the present disclosure is equipped with the load cell to sense the presence or absence, the fall, the overturning, or the like of the article placed on the tray, thereby performing the stable travel.

In addition, the user may change the locations of the tray modules to have a desired gap therebetween, which may improve usability.

In addition, convenience of changing the tray module may be improved because the location of the tray module may be easily changed without detaching the load cell. Effects obtainable from the present disclosure are not limited by the above mentioned effects, and other unmentioned effects can be clearly understood from the above description by those having ordinary skill in the technical field to which the present disclosure pertains.

### [Brief Description of the Drawings]

FIG. 1 is a diagram illustrating a cloud system based on a 5G network according to an embodiment of the present disclosure.
FIG. 2 is a diagram for illustrating a configuration of a driving robot according to an embodiment of the present disclosure.
FIG. 3 is a front perspective view of a driving robot according to an embodiment of the present disclosure.
FIG. 4 is a rear perspective view of a driving robot according to an embodiment of the present disclosure.
FIG. 5 is an exploded perspective view of a driving robot according to an embodiment of the present disclosure.
FIG. 6 is an exploded perspective view of a lower portion of a driving robot according to an embodiment of the present disclosure.
FIG. 7 is an exploded perspective view showing a tray module of a driving robot according to an embodiment of the present disclosure and a fastening structure thereof.
FIG. 8 is a view showing a state in which an outer cover of a tray frame of a driving robot according to an embodiment of the present disclosure is removed.
FIG. 9 is an exploded perspective view of a load cell and brackets of a driving robot according to an embodiment of the present disclosure.
FIG. 10 is a view illustrating a stopper bump and a stopper groove of a driving robot according to an embodiment of the present disclosure.

### [Best Mode]

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element may be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

A robot is a machine device capable of automatically performing a certain task or operation. The robot may be controlled by an external control device or may be embedded in the control device. The robot may perform tasks that are difficult for humans to perform, such as repeatedly processing only a preset operation, lifting a heavy object, performing precise tasks or a hard task in extreme environments.

In order to perform such tasks, the robot includes a driver such as an actuator or a motor, so that the robot may perform various physical operations, such as moving a robot joint.

Industrial robots or medical robots having a specialized appearance for specific tasks due to problems such as high manufacturing costs and dexterity of robot manipulation were the first to be developed.

Whereas industrial and medical robots are configured to repeatedly perform the same operation in a designated place, driving robots have recently been developed and introduced to the market. Robots for use in the aerospace industry may perform exploration tasks or the like on distant planets that are difficult for humans to directly go to, and such robots have a driving function.

In order to perform the driving function, the robot has a driver, wheel(s), a frame, a brake, a caster, a motor, etc. In order for the robot to recognize the presence or absence of surrounding obstacles and move while avoiding the surrounding obstacles, an evolved robot equipped with artificial intelligence has recently been developed.

Artificial intelligence refers to a technical field for researching artificial intelligence or a methodology for implementing the artificial intelligence. Machine learning refers to a technical field for defining various problems handled in the artificial intelligence field and for researching methodologies required for addressing such problems. Machine learning is also defined as an algorithm that improves performance of a certain task through continuous experience.

An artificial neural network (ANN) is a model used in machine learning, and may refer to an overall model having problem solving ability, which is composed of artificial neurons (nodes) that form a network by a combination of synapses. The artificial neural network (ANN) may be defined by a connection pattern between neurons of different layers, a learning process of updating model parameters, and an activation function of generating an output value.

The artificial neural network (ANN) may include an input layer and an output layer, and may optionally include one or more hidden layers. Each layer includes one or more neurons, and the artificial neural network (ANN) may include a synapse that interconnects neurons and other neurons.

In the artificial neural network (ANN), each neuron may output a function value of an activation function with respect to input signals received through synapses, weights, and deflection.

A model parameter may refer to a parameter determined through learning, and may include the weight for synapse connection and the deflection of neurons. In addition, the hyperparameter refers to a parameter that should be set before learning in a machine learning algorithm, and includes a learning rate, the number of repetitions, a mini-batch size, an initialization function, and the like.

The purpose of training the artificial neural network (ANN) may be seen as determining model parameters that minimize a loss function according to the purpose of the robot or the field of use of the robot. The loss function may be used as an index for determining an optimal model parameter in a learning process of the artificial neural network (ANN).

Machine learning may be classified into supervised learning, unsupervised learning, and reinforcement learning according to learning methods.

Supervised learning refers to a method for training the artificial neural network (ANN) in a state where a label for learned data is given. Here, the label may refer to a correct answer (or a resultant value) that should be inferred by the artificial neural network (ANN) when the learned data is input to the artificial neural network (ANN). Unsupervised learning may refer to a method for training the artificial neural network (ANN) in a state where a label for learned data is not given. Reinforcement learning may refer to a learning method in which an agent defined in the certain environment learns to select an action or sequence of actions that may maximize cumulative compensation in each state.

Among artificial neural networks, machine learning implemented as a deep neural network (DNN) including a plurality of hidden layers is also referred to as deep learning, and deep learning is a part of machine learning. Hereinafter, machine learning is used in a sense including deep learning.

Artificial intelligence (AI) technology is applied to the robot, so that the robot may be implemented as a guide robot, a autonomous driving robot, a cleaning robot, a wearable robot, an entertainment robot, a pet robot, and an unmanned aerial robot, etc.

The robot may include a robot control module for controlling operation thereof, and the robot control module may refer to a software module or a chip implemented in hardware.

By means of sensor information obtained from various types of sensors, the robot may acquire state information of the robot, may detect (recognize) the surrounding environment and the object, may generate map data, may determine a driving path and a driving plan, may determine a response to user interaction, or may determine a necessary operation.

The robot may perform the above-described operations using a learning model composed of at least one artificial neural network (ANN). For example, the robot may recognize the surrounding environment and object using a learning model, and may determine a necessary operation using the recognized surrounding environment information or object information. Here, the learning model may be directly learned from the robot or learned from an external device such as an AI server.

In this case, whereas the robot may perform a necessary operation by directly generating a result using the learning model, the robot may also perform an operation by transmitting sensor information to an external device such as an AI server and receiving the resultant information generated thereby.

The robot may perform autonomous driving through artificial intelligence. Autonomous driving refers to a technique in which a movable object such as a robot may autonomously determine an optimal path by itself and may move while avoiding collision with an obstacle. The autonomous driving technique currently being applied may include a technique in which the movable object (e.g., a robot) may travel while maintaining a current driving lane, a technique in which the movable object may travel while automatically adjusting a driving speed such as adaptive cruise control, a technique in which the movable object may automatically travel along a predetermined path, and a driving technique in which, after a destination is decided, a path to the destination is automatically set.

In order to perform autonomous driving, the movable object such as the robot may include a large number of sensors to recognize data of the surrounding situation. For example, the sensors may include a proximity sensor, an illumination sensor, an acceleration sensor, a magnetic sensor, a gyro sensor, an inertial sensor, an RGB sensor, an infrared (IR) sensor, a fingerprint recognition sensor, an ultrasonic sensor, an optical sensor, a microphone, a Lidar, a radar, and the like.

The robot may perform autonomous driving not only based on information collected by sensors, but also based on image information collected by an RGBC camera and an infrared (IR) camera and sound information collected through a microphone. In addition, the robot may travel based on information received through a user input unit. Map data, position information, and information about peripheral situations may be collected through a wireless communication unit. The collected information is requisite for autonomous driving.

Map data may include object identification information for various objects disposed in a space where the robot moves. For example, the map data may include object identification information for fixed objects such as a wall and a door, and other object identification information for movable objects such as a flowerpot and a desk. In addition, the object identification information may include a name, a type, a distance, a location, etc.

Therefore, the robot may essentially include sensors, various input units, a wireless communication unit, and the like to collect data that may be learned by artificial intelligence, and may perform optimal operations by synthesizing various types of information. The learning processor for performing artificial intelligence may perform learning by being mounted in a controller embedded in the robot, may transmit the collected information to a server, may perform learning through the server, and may retransmit the learned result to the robot, so that the robot may perform autonomous driving based on the learned result.

A robot equipped with artificial intelligence may collect the surrounding information even in a new place to implement the entire map, and a large amount of information about a place of the major activity zone may be accumulated, so that the robot may perform more accurate autonomous driving.

The robot may include a touchscreen or a button to receive a user input, and may receive a command by recognizing a user's voice. In order to convert a voice input signal into a character string, the processor may obtain information about the intention corresponding to the user input using at least one of a speech to text (STT) engine for converting a voice input into a character string and a natural language processing (NLP) engine for obtaining information about the intention of natural language.

In this case, at least one of the STT engine and the NLP engine may include an artificial neural network (ANN) trained by a machine learning algorithm. In addition, at least one of the STT engine and the NLP engine may be trained by the learning processor, may be trained by the learning processor of the AI server, or may be trained by distributed processing of the trained results.

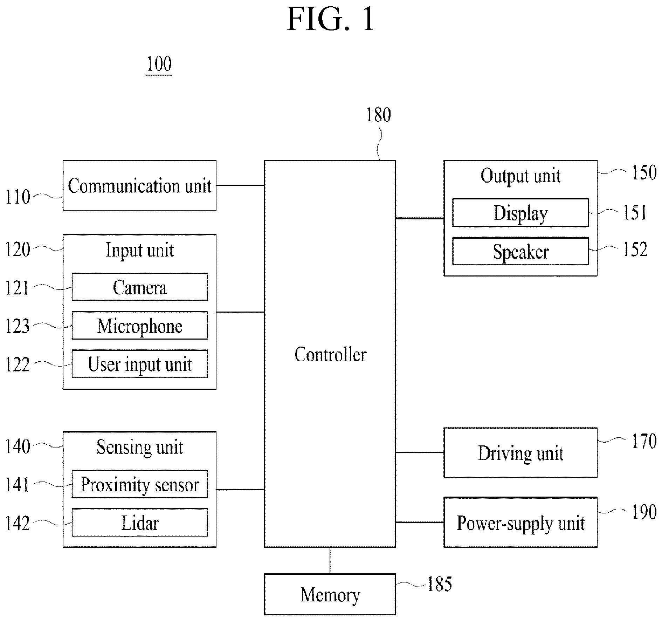

FIG. 1 is a diagram illustrating a cloud system 1000 based on a 5G network according to an embodiment of the present disclosure.

Referring to FIG. 1, the cloud system 1000 may include a driving robot 100, a mobile terminal 300, a robot control system 200, various devices 400, and a 5G network 500.

The driving robot 100 is a robot that transports goods (articles) from a departure point to a destination. If the driving robot 100 is a transport robot that delivers goods, it can move directly from a logistics center to a destination. Alternatively, after the driving robot is loaded on a vehicle at the logistics center and is then delivered to the vicinity of the destination by the vehicle, the driving robot is unloaded from the vehicle and then moves to the destination.

In addition, the driving robot 100 may move articles to the destination not only outdoors but also indoors. The driving robot 100 can be implemented as an AGV, and the AGV may be a transport device that moves by a sensor, a magnetic field, a vision device, etc. on the floor.

When the driving robot 100 is a serving robot that transports food, it should safely transport a bowl while avoiding fixed obstacles such as a table and people indoors. There is a tray for seating the bowl, and unlike a transport robot, a cover is omitted so as to easily put in and take out the bowl.

In addition, because the bowl has an open top, the driving robot 100 should be able to travel smoothly to operate more stably than the transport robot for a case in which the bowl tilts or falls.

The mobile terminal 300 may communicate with the driving robot 100 via the 5G network 500. The mobile terminal 300 may be a device carried by a user who installs a partition in the storage area to load articles, or may be a device carried by a recipient of the loaded articles. The mobile terminal 300 may provide information based on images, and the mobile terminal 300 may include mobile devices such as a mobile phone, a smartphone, a wearable device (e.g., a watch-type terminal, a glass-type terminal, an HMD).

The robot control system 200 may remotely control the driving robot 100 and respond to various requests of the driving robot 100. For example, the robot control system 200 may perform calculations using artificial intelligence (AI) based on the request from the driving robot 100.

In addition, the robot control system 200 may determine a movement path of the driving robot 100. When there is a plurality of destinations, the robot control system 200 may determine the order of the destinations when there are multiple destinations.

The various devices 400 may include a personal computer (PC) 400a, an autonomous vehicle 400b, a home robot 400c, etc. When the driving robot 100 arrives at the transport destination of the articles, the driving robot 100 can directly deliver the articles to the home robot 400c through communication with the home robot 400c.

The various devices 400 may be connected to the driving robot 100, the mobile terminal 300, the robot control system 200, etc., via the 5G network 500 by wire or wirelessly.

The driving robot 100, the mobile terminal 300, the robot control system 200, and various devices 400 are all equipped with 5G modules to transmit and receive data at a rate of 100 Mbps to 20 Gbps (or higher), so that large video files can be transmitted to various devices, and power consumption can be minimized by operating at low power. However, the transfer rate may be implemented differently depending on the embodiments.

The 5G network 500 may include a 5G mobile communication network, a short-range network, the Internet, etc., and may provide a communication environment for devices by wire or wirelessly.

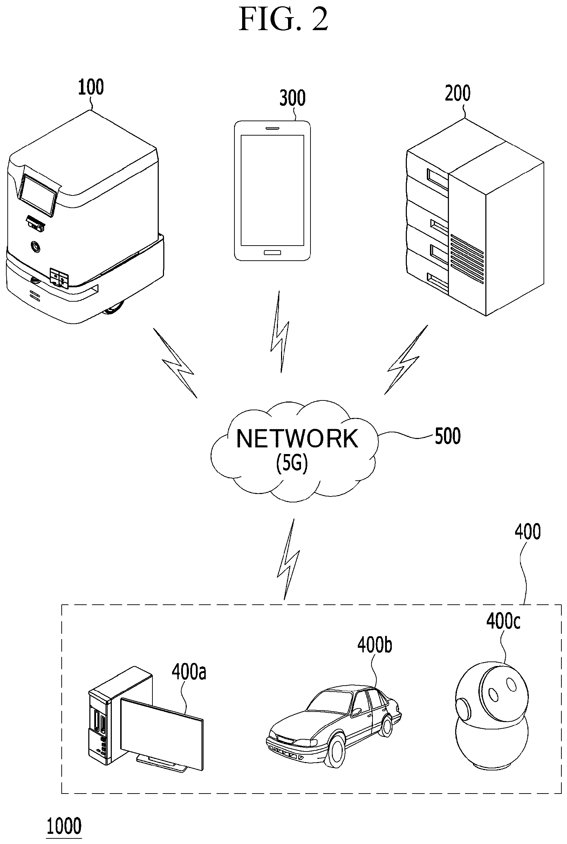

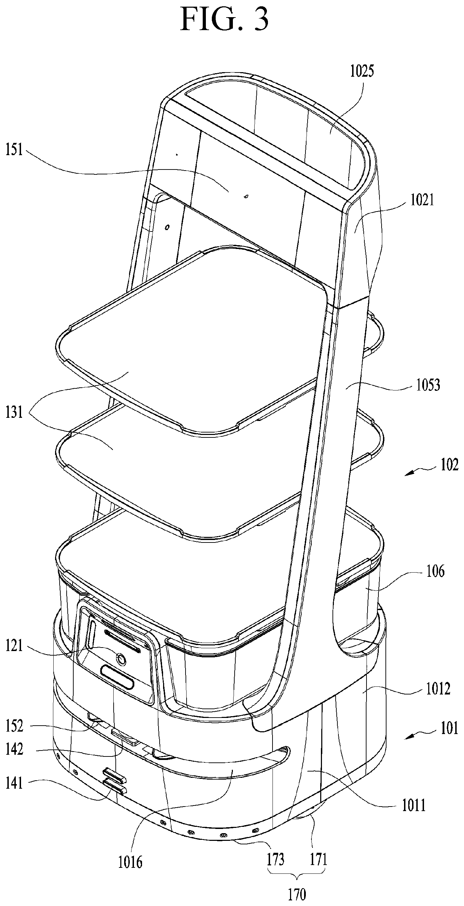

FIG. 2 is a diagram illustrating appearance of the driving robot 100 according to an embodiment of the present disclosure. The driving robot 100 according to an embodiment of the present disclosure will be described with reference to FIGS. 3 to 5.

Referring to FIG. 2, the driving robot 100 may include a body including a storage area 50, and constituent components to be described later may be included in the body. The driving robot 100 may include a communication unit 110, an input unit 120, a sensor unit 140, an output unit 150, a memory 185, a wheel driving unit 170, a controller 180, and a power-supply unit 190. The constituent components shown in FIG. 2 are not always required to implement the driving robot 100, such that it should be noted that the driving robot 100 according to the present disclosure may include more or fewer components than the elements listed above.

The communication unit 110 may include a wired or wireless communication module capable of communicating with the robot control system 200.

As an optional embodiment, the communication unit 110 may be equipped with modules for GSM, CDMA, LTE, 5G, WLAN, Wi-Fi, Bluetooth, RFID, infrared communication (IrDA), ZigBee, and NFC communication.

The input unit 120 may include a user input unit 122 for receiving information from a user. As an optional embodiment, the input unit 120 may include a camera 121 for inputting an image signal, and a microphone 123 (hereinafter referred to as a "microphone") for receiving an audio signal. Here, the camera 121 or the microphone 123 may be treated as a sensor, and a signal acquired from the camera 121 or the microphone 123 may be referred to as sensing data or sensor information.

The input unit 120 may acquire input data to be used when acquiring output data using learning data and a learning model for model learning. The input unit 120 may obtain unprocessed input data. In this case, the controller 180 may extract input feature points as preprocessing for the input data.

The camera 121 may be located in front to detect obstacles in front, and as shown in FIG. 3, a plurality of cameras 121 may be arranged to be different in angle. In more detail, the plurality of cameras 121 may have different capture directions, such as a camera for widely recognizing a front-view area and a camera for capturing a floor.

Alternatively, cameras with different functions may be provided. For example, a wide-angle camera, an infrared (IR) camera, etc. may be provided. The camera may serve as a sensor unit 140 for detecting surrounding objects.

The user input unit 122 may be provided with a touch panel overlapping with a button or a display 151. Alternatively, a user command may be input remotely through the communication unit 110. In this case, the user input unit 122 may include a PC 400 or a remote control device separately provided from the driving robot 100.

Since the user input unit 122 includes all methods capable of receiving user commands, the user input unit 122 can recognize user commands through voice recognition. That is, a voice recognition device that analyzes voice collected from the microphone 123 and extracts user commands can also serve as the user input unit 122.

The input unit 120 may include an article information input unit, and the article information input unit may receive information about the article's size, information about the article's weight, destination information, information about a transport requester, etc. At this time, the article information input unit may include a code reader.

The sensor unit 140 may obtain at least one of internal information of the driving robot 100, surrounding environment information of the driving robot 100, and user information using various sensors.

At this time, the sensor unit 140 may include various types of sensors for recognizing the surroundings for autonomous driving. Representative examples may include a distance detection sensor or a proximity sensor 141 and a Lidar 141.

The proximity sensor 141 may include an ultrasonic sensor that recognizes nearby objects and determines the distance to the objects based on the time taken for emitted ultrasonic waves to return. A plurality of proximity sensors may be provided along the circumference, and may also be provided on an upper side to detect obstacles located on the upper side.

The Lidar 142 is a device that precisely expresses exterior appearances of the surroundings by emitting laser pulses and receiving the light that is reflected from the surrounding objects. The operation principle of the Lidar 142 is similar to that of a radar, but different electromagnetic waves are used in the Lidar 142 and the radar, so that the Lidar 142 and the radar are designed to use different technologies and different utilization ranges.

Lasers may damage human eyesight because they use light with a wavelength of 600 to 1000 nm. The Lidar 142 uses a longer wavelength than the lasers, and is used to measure not only the distance to a target object, but also a moving speed and direction, temperature, surrounding atmospheric material analysis, a concentration measurement, and the like.

In addition, the sensor unit 140 may include an illumination sensor, an acceleration sensor, a magnetic sensor, a gyro sensor, an inertial sensor, an RGB sensor, an infrared (IR) sensor, a fingerprint recognition sensor, an ultrasonic sensor, a light sensor, an optical sensor, etc.

The output unit 150 may generate various output signals related to visual, auditory and/or tactile sensations. The output unit 150 may include an optical output unit that outputs visual information, a display 151, etc. The output unit 150 may include a speaker 152 for outputting auditory information, an ultrasonic output unit for outputting ultrasonic signals belonging to an inaudible frequency, etc., and a haptic module for outputting tactile information.

The memory 185 may store data that supports various functions of the driving robot 100. The memory 185 may store not only a plurality of application programs (or applications) driven by the driving robot 100, but also data and commands required to operate the driving robot 100.

In addition, the memory 185 may store information required to perform operations using artificial intelligence, machine learning, and artificial neural networks. The memory 185 may store a deep neural network model. The deep neural network model may be used to infer a result value for new input data rather than learning data, and the inferred value may be used as a basis of determination required to perform a certain operation.

The power-supply unit 190 may receive external power or internal power under control of the controller 180, such that the power-supply unit 190 may supply the received power to the constituent components included in the driving robot 100. The power-supply unit 190 may include, for example, a battery. The battery 191 may be implemented as an embedded battery or a replaceable battery. The battery may be charged by a wired or wireless charging method, and the wireless charging method may include a magnetic induction method or a magnetic resonance method.

The driving unit 170 is a means for moving the driving robot 100, may include wheels or legs, and may include a wheel driving unit and a leg driving unit for controlling the wheels or legs. A plurality of wheels provided on the bottom surface of the wheel driving unit may be controlled to move the driving robot 100 including the body. The wheels may include a main wheel 171 for fast driving, a caster 173 for changing the direction to another direction, and an auxiliary caster for stable driving so that the loaded articles (L) do not fall during driving.

The leg driving unit (not shown) may control multiple legs according to control of the controller 180, and may thus move the body. The plurality of legs may correspond to a configuration formed so that the driving robot 100 can walk or run. The plurality of legs may be implemented as four legs, but the scope of the present disclosure is not limited thereto. The plurality of legs may be coupled to the body to be integrally formed, and may be implemented to be detachably coupled to the body.

The driving robot 100 may move the body through the driving unit 170 having at least one of the wheel driving unit and/or the leg driving unit. However, in this specification, an example in which the wheel driving unit is mounted on the driving robot 100 will be mainly described.

The controller 180 is a module that controls the configurations of the driving robot 100. The controller 180 may refer to a data processing device embedded in hardware that has a physically structured circuit to perform a function expressed by code or commands included in a program. As an example of the data processing device embedded in hardware, this exemplary data processing device may include processing devices such as a microprocessor, a central processing unit (CPU), a processor core, a multiprocessor, an ASIC, and an FPGA, but the scope of the present disclosure is not limited thereto.

The driving robot 100 may include a loading area 50 in a main body, and the loading area 50 may include a side wall or cover 10 to protect the loaded article from falling. Referring to FIG. 3, it is illustrated that the cover 10 is disposed, but a form in which only the side wall is disposed while omitting a top surface is also possible.

The loading area 50 does not have a separate layer division in the drawing, but it may be composed of a plurality of layers to load a plurality of articles in the layers. After unloading an article L on a lower side, an article on an upper side may be moved to a lower layer and additionally unloaded.

For example, the controller 180 may collect the above information through the input unit 120. The input of the input unit 120 may also include a touch input on the display.

Based on the collected information, the controller 180 may transmit information on the articles (L) loaded in the loading area 50 to the mobile terminal 200 (see FIG. 1) through the communication unit 110.

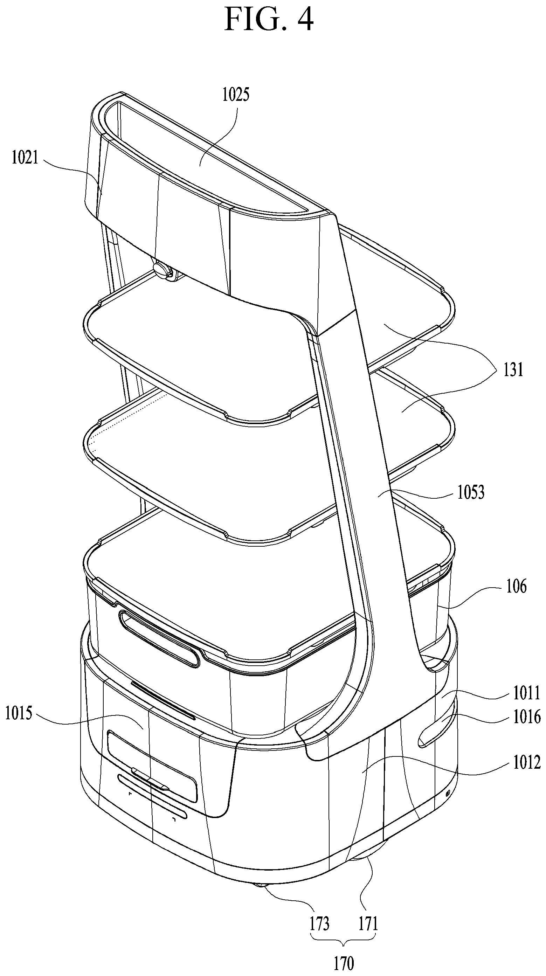

FIG. 3 is a front perspective view of the driving robot 100 according to an embodiment of the present disclosure, and FIG. 4 is a rear perspective view of the driving robot 100 according to an embodiment of the present disclosure.

A lower portion 101 of the driving robot 100 of the present disclosure, which is equipped with the driving unit 170, a substrate module 181, the battery 191, and the like, may be applied to all robots equipped with a travel function, such as a serving robot, a transport robot, or a sterilization robot.

However, for convenience of description, the description will be made based on the serving robot equipped with a tray module 131 at an upper portion as shown in FIGS. 3 and 4, but it may also be applied to other types of autonomous driving robots 100.

Referring to FIG. 3, the driving robot 100 may be divided into the lower portion 101 and an upper portion 102. The lower portion 101 may include a frame assembly 104 for mounting electronic components, and the driving unit 170 located under the frame assembly 104 and responsible for the movement of the driving robot 100.

The electrical components mounted on the frame assembly 104 include the substrate module 181, which is an assembly of a plurality of ICs and a substrate, as a controller that controls the driving robot 100. In addition, the battery 191 that supplies power, various sensors for assisting the travel, the camera 121, and the like may be mounted. The speaker 152, an LED lamp, or the like for output may be mounted.

The display 151 may be in charge of touch input and visual output. Because the touch input is performed by hand and the visual output is recognized by eyes, the display 151 is disposed at the upper portion 102 considering a user's height.

Most of the electrical components except for the display 151 may be located at the lower portion 101. The lower portion 101 may include a lower housing 1011, 1012, 1013, 1014, and 1015 forming an outer appearance thereof, and the lower structure 101 may have a cylindrical or rectangular box shape.

As shown in FIG. 3, the lower structure 101 may be formed to have a height smaller than a width to secure stability when the driving robot 100 travels. When the bowl or the article is seated on the tray module 131, which is the upper portion 102, a center of gravity may move upward, so that most of the electronic components may be placed at the lower portion 101 to lower the center of gravity.

The frame assembly 104 of the lower portion 101 may be made of a metal material, so that a weight of the lower portion 101 may be greater than that of the upper portion. To secure greater weight of the lower portion 101, a weight may be added on the lower portion 101.

The Lidar 142, the camera 121, the proximity sensor, and the like may be disposed at a front portion of the lower portion 101. Because the Lidar 142 has a wide sensing angle, the Lidar 142 may be seated in a groove 1016 that is recessed rearward from a front surface as shown in FIG. 3. The groove 1016 may have a horizontally elongated shape and may have a shape that is recessed rearward by about 1/3 of a depth when viewed from the side.

Even when water pours from above, water is not directly introduced into the groove 1016, so that a failure of the Lidar 142 located inside the groove 1016 resulted from submergence may be prevented from occurring. In addition to the Lidar 142, electronic components that should be exposed to the outside, such as the speaker 152 and a heat dissipation fan 187, may be disposed in the groove 1016 to further secure durability.

The camera 121 may be positioned at a front side of a top surface of the lower portion 101. The driving robot 101 may be equipped with a plurality of cameras arranged at different angles to recognize the object in a wide range. That is, the camera 121 may include at least one of a first camera 121 facing forward, a second camera 121 obliquely inclined upward, and a third camera 121 obliquely inclined downward.

The driving unit 170 positioned beneath the lower portion 101 may include a plurality of wheels, and more specifically, may include the main wheel 171 including a motor 1715 providing a traveling force, and a caster 173 that controls a direction and enhances travel safety.

The main wheel 171 may receive rotational power centered on a shaft of the motor extended laterally and travel, and a caster body 1732 to which a caster wheel 1731 is connected may be coupled to the lower portion 101 to be rotatable about a shaft 1736 extending vertically.

The upper portion 101 includes a tray frame 1055 extending upward from the lower housing and the tray module 131 coupled to the tray frame 1055. To stably support the tray module 131, a pair of tray frames 1055 may extend upward on both left and right sides, and the tray module 131 may be supported by tray holders 133 coupled onto the tray frames 1055 on both sides.

As illustrated in FIG. 3, a plurality of tray modules 131 may be included. The tray frame 1055 is inclined obliquely rearward, and a front space of the tray frame 1055 is secured relatively wide, making it easier to put in and take out the bowl.

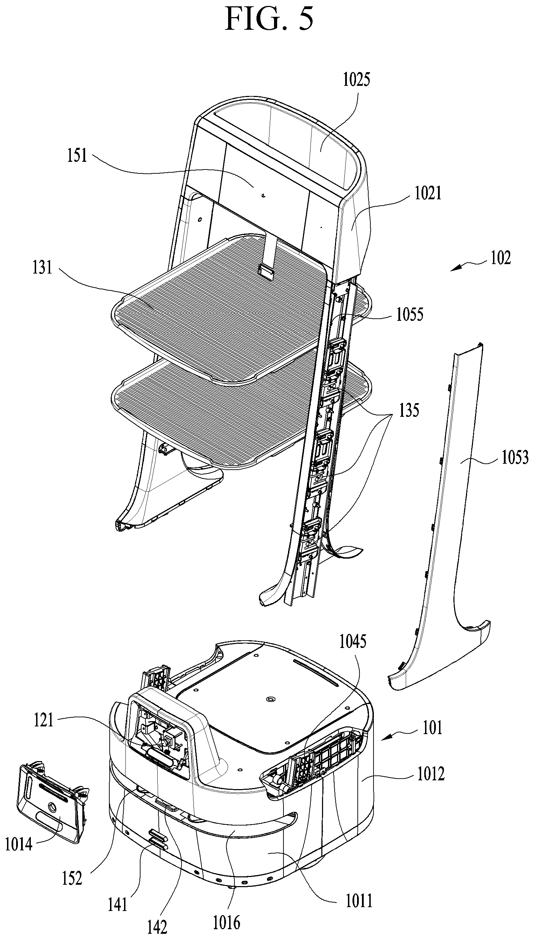

Upper ends of the pair of tray frames 1055 may include a head frame 1021 where they are connected to each other. The display 151 described above may be located at a front side of the head frame 1021. The electronic components other than the display 151 are not located at the head frame 1021, so that an upper basket 1025 may be disposed as shown in FIG. 5.

Supplies such as wet tissues or toilet paper may be placed in the upper basket 1025, so that customers may easily take the supplies. Further, because the upper basket 1025 is a portion that is not contaminated by food broth or the like, the upper basket 1025 may be hygienically managed.

A slide basket 106 that is seated on the top surface of the lower housing may be further disposed. Because the slide basket 106 is supported by the top surface of the lower housing, the slide basket 106 may store relatively heavy articles such as empty bowls. The slide basket 106 has sufficient depth to prevent the broth or the like from spilling and is detachable from the driving robot 100 in a sliding scheme, making it convenient for transporting the article and cleaning.

The slide basket 106 may be located between the tray module 131 and the top surface of the lower housing. Although the tray module 131 is shown in the drawing as being located directly above the slide basket 106, the slide basket 106 may be disposed at a location spaced apart from the tray module 131 by a predetermined distance.

The tray frames 1055 are located on left and right sides of the slide basket 106, and a casing of the camera 121 in which the camera 121 is mounted is located in front of the slide basket 106, so that the slide basket 106 may only be withdrawn in a rearward direction and may not be easily withdrawn in other directions, so that stable travel is available.

A handle may be disposed at a rear side such that the slide basket 106 is easily pulled in the rearward direction.

FIG. 5 is an exploded perspective view of the driving robot 100 according to an embodiment of the present disclosure. The upper portion 101 may be separated from the lower portion 101, and when a side casing forming the outer appearance of the tray frame 1055 is removed, a connecting frame 1045 extending upward from the lower portion 101 and a fastening portion of the tray frame 1055 may be exposed. By removing a screw that fastens the connecting frame 1045 with the tray frame 1055, the upper portion 101 may be separated from the lower portion 101 as shown in FIG. 5.

Electronic components of the upper portion 101 may include a load cell 135 that senses weights of the display 151 and the tray module 131, and the electronic component may be connected to the substrate module 181, which is the controller located at the lower portion 101, by connecting a cable along the extension direction of the tray frame 1055.

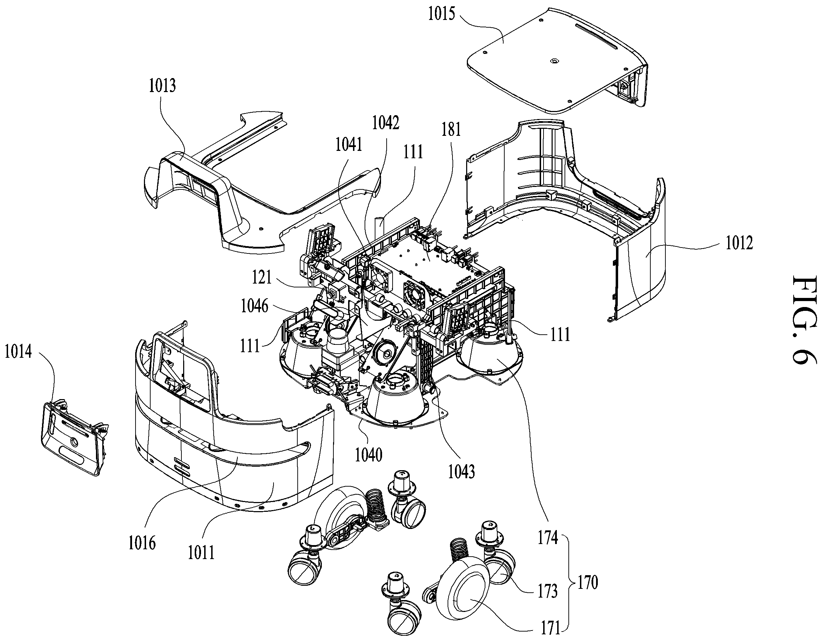

FIG. 6 is an exploded perspective view of the lower portion 101 of the driving robot 100 according to an embodiment of the present disclosure. The lower housing forming the outer appearance of the lower portion 101 may include a first casing 1011 positioned at a front surface of the lower portion, a second casing 1012 positioned at a rear surface of the lower portion, and a third casing 1013 forming a top surface of the lower portion.

The frame assembly 104, the driving unit 170, the substrate module 181, and the battery 191 may be mounted in an electrical component portion surrounded by the first casing 1011, the second casing 1012, and the third casing 1013.

A camera casing protruding from the front side of the lower portion 101 may be equipped as a separate casing independent of the first casing 1011 or the third casing 1013, or as illustrated in FIG. 6, a portion of the third casing 1013 may protrude to form the casing of the camera 121. Because a front side of the camera 121 is equipped with transparent glass that transmits light, a camera cover 1014 may be disposed separately as illustrated in FIG. 6.

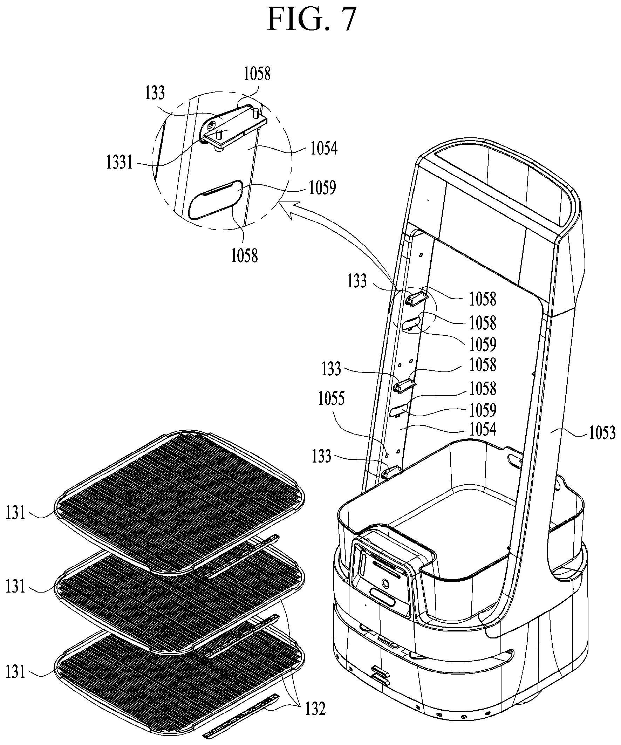

FIG. 7 is an exploded perspective view showing the tray module 131 of the driving robot 100 according to an embodiment of the present disclosure and a fastening structure thereof. As shown in FIG. 3, the driving robot 100 of the present disclosure may be equipped with the plurality of tray modules 131 to transport the bowls at an upper portion thereof.

The existing autonomous driving robots 100 for serving has a limitation in that a vertical level of the tray module 131 is fixed, making it difficult to transport bowls with a great height.

In addition, it is difficult for the robot to sense presence or absence of the bowl on the tray module 131 or to sense a situation such as the bowl falling during the transport, resulting in a problem such as continuing to travel even when the bowl overturns or falls.

Therefore, there is a need for the tray module 131 that may travel stably while a location thereof may be adjusted variously, and at the same time, sense a weight of the bowl placed on the tray module 131.

To sense the weight on the tray module 131, a load cell 135 that measures the weight is required. However, because the load cell 135 is connected to the controller, it is difficult to detach the load cell 135 from the tray frame 1055, and thus, there is inconvenience of having to detach the load cell 135 when changing the location of the tray module 131.

In the present disclosure, the driving robot 100 including a tray fixing structure that may change the location of the tray module 131 while the load cell 135 is fixed so as to satisfy both of the above needs will be described.

As illustrated in FIG. 7, the tray module 131 of the present disclosure may be separated from the tray frame 1055 to change the location thereof, and a location of the tray holder 133 for supporting the tray module 131 on the tray frame 1055 may be changed to adjust the location of the tray module 131.

The tray frame 1055 may include a fastening hole 1058 for the tray holder 133 to be inserted. As the tray holder 133 is inserted into the fastening hole 1058 in an inward direction, a support 1331 of the tray holder 133 that supports a lower portion of the tray module 131 may protrude in an inward direction of the tray frame 1055.

Tray bars 132 fastened to the tray holder 133 may be positioned on both left and right sides of the tray module 131, and the tray bar 132 may reinforce a rigidity of the tray module 131 and transfer a weight of the tray module 131 to the tray holder 133 to stably support the tray module 131.

As shown in FIG. 3, three tray modules 131 of the present disclosure may be basically arranged. A spacing between two tray modules becomes too small when more tray modules are additionally arranged, while the number of trays is too small when only two tray modules 131 are arranged. The driving robot 100 of the present disclosure may couple the three tray modules 131 onto the tray frames 1055.

The tray module 131 of the driving robot 100 of the present disclosure may have the variable location on the tray frame 1055. However, the lowest tray located above the slide basket 106 located at the bottom does not necessarily need to move upward. Therefore, to allow only the locations of the two tray modules 131 located at an upper side to be changed, only the fastening hole 1058 corresponding to each of the tray modules 131 located at the upper side may include a plurality of fastening holes.

The fastening holes 1058 of the present embodiment may be arranged in pairs, with the two fastening holes in the same set being adjacent to each other and spaced apart from the holes in other sets. As shown in FIG. 7, the spacing between the two fastening holes 1058 may be non-uniform.

One tray module 131 may be fixed using one of the two adjacent fastening holes 1058, and the fastening holes 1058 spaced apart from each other may be fastening holes 1058 corresponding to different tray modules 131.

The unused fastening hole 1058 may be covered such that the inside of the tray frame 1055 is not exposed, using a fastening hole cover 1059 as shown in FIG. 7.

The fastening hole 1058 may have an oval or rectangular shape that is extended vertically to the tray frame 1055. When the tray frame 1055 is coupled to the lower portion 101 in a form in which an upper portion is inclined rearward as shown in FIG. 7, a longitudinal direction of the fastening hole 1058 may be slightly inclined rather than being horizontal.

For the longitudinal direction of the fastening hole 1058 to be horizontal, the fastening hole 1058 should be in a form of being inclined obliquely with respect to the tray frame 1055, and the load cell 135 and brackets 136 and 137 corresponding thereto may also be formed to be inclined obliquely.

However, because inclined directions of right and left sides of the tray frame 1055 are different from each other, there is an inconvenience of having to differentiate the load cell 135 and the brackets 136 and 137 depending on whether they are positioned on the right or left side. To standardize the components 1055, 135, 136, and 137 mounted on both sides, the fastening hole 1058 may be defined in a form that extends vertically with respect to the tray frame 1055.

A support surface 1331 of the tray holder 133 that extends through and protrudes from the fastening hole 1058 may have a form that extends vertically to a direction of gravity (i.e., horizontally) such that the tray module 131 may remain horizontal even when the fastening hole 1058 extends to be inclined relative to the horizontal direction.

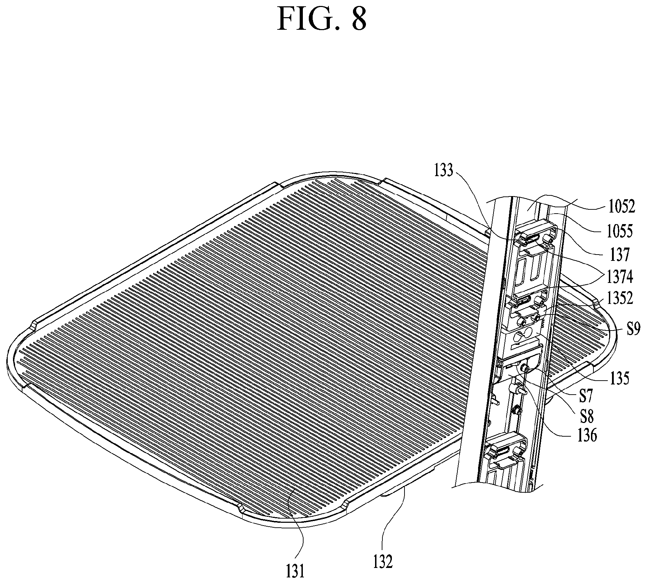

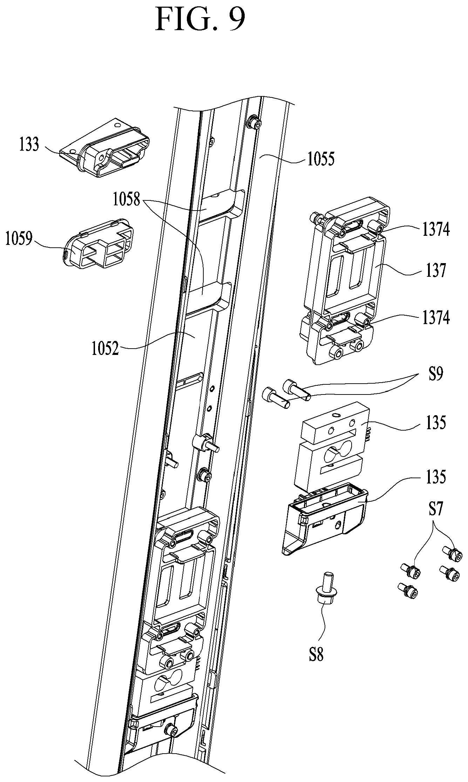

FIG. 8 is a view showing a state in which an outer cover 1053 of the tray frame 1055 of the driving robot 100 according to an embodiment of the present disclosure is removed, and FIG. 9 is an exploded perspective view of the load cell 135 and the brackets of the driving robot 100 according to an embodiment of the present disclosure.

The tray frame 1055 may be equipped as a steel beam having a U-shaped horizontal cross-section and extending in the vertical direction. The tray frame covers 1053 and 1054 may be coupled to outer and inner sides of the tray frame 1055, which includes a space therein surrounded in the U-shape.

The tray frame 1055 may be fastened to the connecting frame 1045 of the frame assembly 104 located beneath the same, and may be disposed to be slightly (approximately 10°) inclined rearward, as illustrated in FIG. 7.

The tray holder 133 that fixes the tray module 131 and the load cell 135 that senses the weight of the article placed on the tray module 131 may be mounted in the surrounded U-shaped inner space of the tray frame 1055.

Referring to FIG. 8, the components mounted in the inner space of the tray frame 1055 may be arranged in an order of a fixed bracket 136, the load cell 135, and a moving bracket 137 from the bottom. Such configuration may be achieved on each of both sides for each tray module 131.

The load cell 135 may include an elastic body whose shape changes depending on the weight, and may sense the weight of the article on the tray module 131 using a strain gauge that senses the deformation of the elastic body.

Shapes of the load cell 135 may be various. In the present embodiment, the elastic body that is bent in a zigzag manner, including a first slot extending at a front side and a second slot extending at a rear side, is used.

When a force is applied to an upper side of the load cell 135, a gap between the first slot and the second slot may change, and the strain gauge located on the load cell 135 may sense the change and determine that the article is loaded on the tray module 131.

Therefore, a lower side of the load cell 135 should be fixed to the tray frame 1055, and the upper side thereof should be connected to the tray module 131. The load cell 135 may be directly fixed to the tray frame 1055, or may be fixed to the tray frame 1055 using the fixed bracket 136 as illustrated in FIG. 9.

The fixed bracket 136 may be fixed to the tray frame 1055 using a screw S7, and the fixed bracket 136 and the load cell 135 may be fixed with each other using a screw S8. Fixing methods other than the screw may be used, but for convenience of description, the description will be based on the screw.

The load cell 135 may route a signal cable along the tray frame 1055 to transmit the signal sensed by the strain gauge to the substrate module 181 located at the lower portion 101.

The moving bracket 137 located on the load cell 135 is fixed to the load cell 135 using a screw S9 as shown in FIG. 9, but is not directly fastened to the tray frame 1055. Therefore, when the tray module 131 is seated, the moving bracket 137 may move and deform the load cell 135.

The load cell 135 and the moving bracket 137 may be fastened to each other in advance before the fixed bracket 136 and the load cell 135 are fastened to each other.

Because the tray holder 133 coupled to the moving bracket 137 protrudes outward via the fastening hole 1058, the support of the tray holder 133 may be caught in the fastening hole 1058 and restricted in movement.

In addition, a stopper bump 1372 and a stopper groove 1052 may be included to prevent the bowl positioned on the tray module 131 from falling as the tray frame 1055 is tilted.

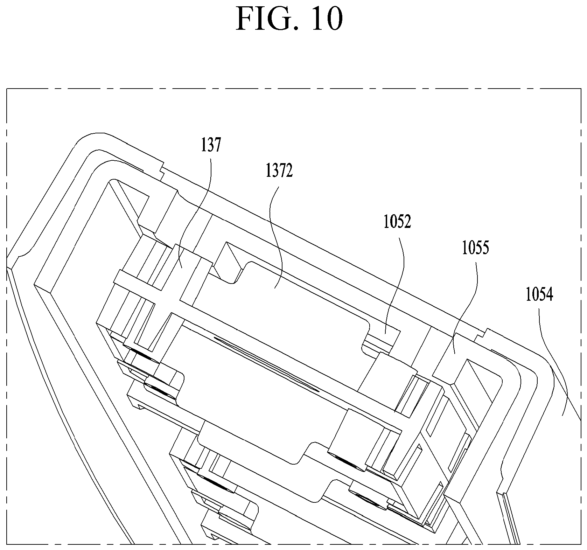

FIG. 10 is a view illustrating the stopper bump 1372 and the stopper groove 1052 of the driving robot 100 according to an embodiment of the present disclosure. The stopper bump 1372 protruding on a surface facing the tray frame 1055 of the moving bracket 137 and the stopper groove 1052 concavely defined in the tray frame 1055 corresponding thereto may be included.

The stopper bump 1372 may prevent the tray from tilting and the bowl from falling by limiting a range in which the moving bracket 137 shakes in a left and right direction. A size of the stopper groove 1052 may correspond to that of the stopper bump 1372, but may be slightly greater than the size of the stopper bump 1372. The moving bracket 137 may move in the left and right direction within a certain range, which may induce the deformation of the load cell 135.

The stopper groove 1052 may be defined only at a location corresponding to the stopper bump 1372 of the moving bracket 137, but may extend in the vertical direction as shown in FIG. 9 for extrusion molding during manufacturing and for the rigidity of the tray frame 1055. The fixed bracket 136 may also protrude to be inserted into the stopper groove 1052 corresponding to the extending shape of the stopper groove 1052.

The moving bracket 137 may include a holder fastening portion 1374 to which the tray holder 133 is fastened, and the moving bracket 137 may include a plurality of holder fastening portions 1374. The user may select the location of the tray module 131, and at this time, the user only needs to change the location of the tray holder 133 without the hassle of changing the location of the load cell 135.

Regardless of a location of the moving bracket 137 to which the tray module 131 is fastened, the load cell 135 may sense the weight by the change in the weight on the tray module 131. With the moving bracket 137 having the plurality of holder fastening portions 1374 as such, the location of the tray module 131 may be easily selected/changed without changing the location of the load cell 135.

Two holder fastening portions 1374 are arranged in the vertical direction on the drawing, but two or more holder fastening portions 1374 may be arranged. The fastening hole 1058 of the tray frame 1055 may be defined at a location corresponding to the holder fastening portion 1374.

As described above, the driving robot 100 of the present disclosure is equipped with the load cell 135 to sense the presence or absence, the fall, the overturning, or the like of the article placed on the tray, thereby performing the stable travel.

In addition, the user may change the locations of the tray modules 131 to have a desired gap therebetween, which may improve usability.

In addition, convenience of changing the tray module 131 may be improved because the location of the tray module 131 may be easily changed without detaching the load cell 135.

The above detailed description should not be construed as limiting in all respects, but should be considered illustrative. The scope of the present disclosure should be determined by a reasonable interpretation of the appended claims, and all changes within the equivalent scope of the present disclosure are included in the scope of the present disclosure.

## Claims

1. A driving robot comprising:
a lower housing;
a frame assembly positioned inside the lower housing;
a driving structure positioned under the frame assembly;
a tray frame coupled to an upper portion of the lower housing and extending upward;
a load cell coupled to the tray frame;
a moving bracket coupled to an upper portion of the load cell;
a tray holder coupled to the moving bracket and protruding via a fastening hole of the tray frame; and
a tray module seated on the tray holder.

2. The driving robot of claim 1, wherein the fastening hole of the tray frame includes a plurality of fastening holes,
wherein the moving bracket is formed at a location corresponding to each pair of fastening holes and includes a plurality of tray holder fastening portions.

3. The driving robot of claim 2, further comprising a hole cover covering a fastening hole not coupled with the tray holder among the plurality of fastening holes.

4. The driving robot of claim 1, wherein the load cell includes:
an elastic body whose shape changes when pressurized; and
a strain gauge configured to generate an electric signal based on the deformation of the elastic body.

5. The driving robot of claim 4, wherein the elastic body has a Z-shape including a first slot extending rearward from a front side and a second slot extending forward from a rear side.

6. The driving robot of claim 4, wherein the tray frame includes a stopper groove defined in a surface facing the moving bracket and extending in a vertical direction,
wherein the moving bracket includes a stopper bump protruding in a direction of the stopper groove of the tray frame,
wherein a width of the stopper groove is greater than a width of the stopper bump.

7. The driving robot of claim 1, further comprising a fixed bracket fixed to the tray frame,
wherein the load cell is fastened to an upper portion of the fixed bracket and coupled to the tray frame.

8. The driving robot of claim 1, wherein the tray frame is inclined such that an upper end is positioned rearward of a lower end,
wherein the fastening hole is defined in a direction perpendicular to the extension direction of the tray frame,
wherein the tray holder includes a support flat in a direction perpendicular to a direction of gravity.

9. The driving robot of claim 1, further comprising a tray bar located at a lower portion of the tray module, extending in a front and rear direction, and including a tray fastening portion fastened to the tray holder,
wherein the tray fastening portion includes a plurality of tray fastening portions formed in the front and rear direction.

10. The driving robot of claim 1, further comprising:
a battery coupled to the frame assembly;
a substrate module coupled to the frame assembly and positioned above the battery; and
a cable connecting the load cell to the substrate module via the tray frame.

11. The driving robot of claim 1, wherein the tray frame includes a pair of tray frames on left and right sides,
wherein the driving robot includes:
a head frame connecting upper ends of the pair of tray frames to each other; and
an upper basket formed on the head frame.

12. The driving robot of claim 11, further comprising a display located on a front surface of the upper basket.

13. The driving robot of claim 1, wherein the tray frame includes a pair of tray frames on left and right sides,
wherein the driving robot further includes a slide basket inserted into a space between the tray module, the lower housing, and the pair of tray frames.
